# EUROPEAN PATENT SPECIFICATION

(11) **EP 3 043 127 B1**
(45) Date of publication and mention of the grant of the patent: **27.03.2019**
(21) Application number: 16150600.1
(22) Date of filing: 08.01.2016
(51) Int. Cl.: F25B 30/02, F25B 7/00, F25D 21/06, F25B 13/00, F25B 27/02, F25B 47/02, F25B 49/02

(54) **AIR CONDITIONER AND CONTROL METHOD THEREOF**
KLIMAANLAGE UND ZUGEHÖRIGES STEUERUNGSVERFAHREN
CLIMATISEUR ET SON PROCÉDÉ DE FONCTIONNEMENT

(30) Priority: 12.01.2015 KR 20150004175
(43) Date of publication of application: 13.07.2016
(73) Proprietor: LG Electronics Inc., Seoul 07336 (KR)
(72) Inventor: SHIN, Kwangho, 08592 Seoul (KR); JEONG, Hojong, 08592 Seoul (KR); CHUNG, Minho, 08592 Seoul (KR); CHOI, Song, 08592 Seoul (KR)
(74) Representative: Vossius & Partner Patentanwälte Rechtsanwälte mbB

(56) References cited:
- JP-A- 2002 168 539
- JP-A- 2003 021 416
- JP-A- 2008 309 383
- JP-A- 2011 075 162

## Description

An air conditioner is disclosed herein.

An air conditioner is an apparatus which cools, warms, or purifies indoor air to provide a more comfortable indoor environment to a user. An air conditioner may be classified into an electric heat pump (EHP) type using electric power, and a gas heat pump (GHP) type using a gas fuel, such as LPG and LNG, according to a power source for driving a compressor. Here, in a GHP type, an engine is operated by burning a gas fuel, and thus a compressor is driven.

JP 2011 075162 A discloses an air conditioner according to the preamble of claim 1. This air conditioner is equipped with: a gas branch pipe and a liquid branch pipe connecting an existing EHP-type outdoor unit and an existing GHP-type outdoor unit, and an indoor unit; gas flow rate adjustment valves for adjusting a flow rate of a refrigerant in a gas state between the indoor unit and the outdoor units; and fluid flow rate adjustment valves for adjusting a flow rate of a refrigerant in a liquid state. A control section acquires model information of the outdoor units and air-conditioning load information of the indoor unit, and controls openings of the gas flow rate adjustment valves and the liquid flow rate adjustment valves so that the flow rates of the refrigerants respectively supplied to the indoor unit from the outdoor units according to the model information and the air-conditioning load information, are equal to the flow rates of the refrigerants respectively supplied from the indoor unit to the outdoor units.

JP 2002 168539 A relates to an air conditioner which is provided with a plurality of outdoor units. The line connecting these outdoor units in parallel is connected to the line from an indoor unit, and deals with air conditioning load by controlling the number of outdoor units in operation. At least one outdoor unit is driven by mechanical power, and other outdoor units are driven by motor power. One unit of the outdoor units driven by motor power is provided with a heat exchanger which performs heat exchange between a refrigerant and the waste heat of the drive engine of the above outdoor unit driven by mechanical power, and at heating, the heat exchanger works as a heat pump on the side of a low-temperature heat source.

A conventional EHP type air conditioner is disclosed in Korean Patent Application No. 10-2003-0077857. In the disclosed EHP type air conditioner, since the compressor may be easily controlled by adjusting a supply current, it is suitable to respond to a partial load, and it has high energy efficiency. However, in the EHP type air conditioner, there is a problem in that an outdoor heat exchanger is covered with frost when low temperature warming is performed.

A conventional GHP type air conditioner is disclosed in Korean Patent Application No. 10-2003-0077857. Since the disclosed GHP type air conditioner uses waste heat of the engine, it has excellent defrosting performance, but there is a problem in that it has low engine efficiency due to a heat loss or the like.

Therefore, in a market of the air conditioner, measure capable of providing an air conditioner having further improved performance and efficiency are required.

It is the object of the present invention to provide an air conditioner capable of further improving performance and efficiency. According to the present invention the above objective is solved by the features of claims 1 and 12.

According to the various embodiments as described below, the air conditioner capable of further improving the performance and the efficiency can be provided.

### BRIEF DESCRIPTION OF THE DRAWINGS

Embodiments will be described in detail with reference to the following drawings in which like reference numerals refer to like elements, and wherein:
Fig. 1 is a system arrangement view of an air conditioner according to one embodiment of the present disclosure;
Fig. 2 is a view illustrating an operation of the air conditioner when waste heat of a GHP outdoor unit of the air conditioner of FIG. 1 is used;
Fig. 3 is a view illustrating an efficiency improvement of an EHP outdoor unit of the air conditioner of FIG. 2;
Fig. 4 is a view illustrating an operation of the air conditioner when a first outdoor heat exchanger of the EHP outdoor unit of the air conditioner of FIG. 1 is used;
Fig. 5 is a view illustrating an operation of the air conditioner when a second outdoor heat exchanger of the GHP outdoor unit of the air conditioner of FIG. 1 is used; and
Fig. 6 is a view illustrating a hybrid operation map when the air conditioner of FIGS. 4 and 5 is operated.

### DETAILED DESCRIPTION

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

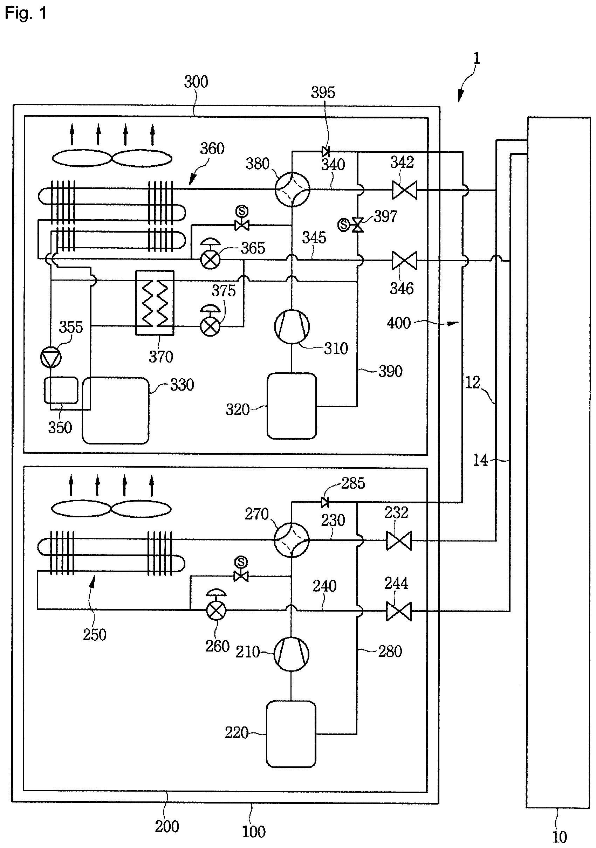

Fig. 1 is a system arrangement view of an air conditioner according to one embodiment of the present disclosure.

Referring to FIG. 1, the air conditioner 1 includes an indoor unit 10 and an outdoor unit 100.

One or a plurality of indoor units 10 may be provided. That is, at least one or more indoor units 10 may be provided. The at least one or more indoor units 10 may be connected with the outdoor unit 100, and may cool, warm, or purify indoor air.

The indoor unit 10 includes one pair of indoor unit pipes 12 and 14 for a connection with the outdoor unit 100. The pair of indoor unit pipes 12 and 14 are an indoor unit gas pipe 12 which connects an EHP gas pipe 230 and a GHP gas pipe 340 which will be described later, and an indoor unit liquid pipe 14 which connects an EHP liquid pipe 240 and a GHP liquid pipe 345 which will be described later.

The outdoor unit 100 is connected with the indoor unit 10, and performs compressing, expanding or the like of a refrigerant to allow a sufficient heat exchanging operation of the indoor unit 10. A plurality of outdoor units 100 may be provided. Hereinafter, the embodiment limited to a state in which one pair of outdoor units 100 are provided will be described.

The outdoor unit 100 is provided in a combined type of an electric heat pump (EHP) type using electric power and a gas heat pump (GHP) type using a gas fuel, such as LPG and LNG.

The outdoor unit 100 includes an EHP outdoor unit 200, a GHP outdoor unit 300, and a low pressure refrigerant common pipe 400.

The EHP outdoor unit 200 is an outdoor unit which is operated in an EHP type, and includes a first compressor 210, a first accumulator 220, an EHP gas pipe 230, an EHP liquid pipe 240, one pair of connection valves 232 and 244, a first outdoor heat exchanger 250, a first outdoor heat exchanger control valve 260, a first four-way valve 270, a first accumulator connection pipe 280, and a first check valve 285.

The first compressor 210 is an element for compressing the refrigerant, and is driven by applying a voltage. When the voltage is applied to the first compressor 210, the first compressor 210 may compress the refrigerant.

The first accumulator 220 is an element for supplying the refrigerant to the first compressor 210. Specifically, when the refrigerant flows back or is introduced into a liquid, the first compressor 210 may be damaged, and thus the first accumulator 220 temporarily stores a mixture of oil and the refrigerant.

The EHP gas pipe 230 connects the first compressor 210 with at least one indoor unit 10. Specifically, the EHP gas pipe 230 connects the first compressor 210 with the indoor unit gas pipe 12.

The EHP liquid pipe 240 connects the first outdoor heat exchanger 250 with at least one indoor unit 10. Specifically, the EHP liquid pipe 240 connects the first outdoor heat exchanger 250 with the indoor unit liquid pipe 14.

The pair of connection valves 232 and 244are an element for a connection with the indoor unit 10. The pair of connection valves 232 and 244include a connection valve 232 which connects the EHP gas pipe 230 with the indoor unit gas pipe 12, and a connection valve 244 which connects the EHP liquid pipe 240 with the indoor unit liquid pipe 14.

The first outdoor heat exchanger 250 is an element which evaporates or condenses the refrigerant according to a cooling and warming operation of the air conditioner 1. Specifically, when the air conditioner 1 performs a cooling operation, the refrigerant is condensed, and when the air conditioner 1 performs a warming operation, the refrigerant is evaporated.

The first outdoor heat exchanger control valve 260 is an element which controls a flow of the refrigerant to the first outdoor heat exchanger 250. Since the first outdoor heat exchanger control valve 260 is well known, detailed description thereof will be omitted.

The first four-way valve 270 is an element which switches a passage of the refrigerant flowing in the EHP outdoor unit 200. Since the first four-way valve 270 is well known, detailed description thereof will be omitted.

The first accumulator connection pipe 280connects the first accumulator 220 with the first outdoor heat exchanger 250. The first accumulator connection pipe 280 is connected with the low pressure refrigerant common pipe 400 which will be described later.

The first check valve 285 is an element which controls the flow of the refrigerant flowing out of the first outdoor heat exchanger 250. The first check valve 285 is provided at the first accumulator connection pipe 280.

The GHP outdoor unit 300 is an outdoor unit which is operated in an GHP method, and includes a second compressor 310, a second accumulator 320, an engine 330, a GHP gas pipe 340, a GHP liquid pipe 345, one pair of connection valves 342 and 346, a cooling water heat exchanger 350, a cooling water pump 355, a second outdoor heat exchanger 360, a second outdoor heat exchanger control valve 365, a waste heat exchanger 370, a waste heat exchanger control valve 375, a second four-way valve 380, a second accumulator connection pipe 390, a second check valve 395, and a control valve 397.

The second compressor 310 is an element for compressing the refrigerant, and is operated through driving of the engine 330 which will be described later. When a driving force is transmitted to the second compressor 310 through the engine 330, the second compressor 310 may compress the refrigerant, like the first compressor 210.

The second accumulator 320 is an element which supplies the refrigerant to the second compressor 310. When the refrigerant flows back or is introduced into a liquid, the second compressor 310 may be damaged, and thus the second accumulator 320 temporarily stores the mixture of oil and the refrigerant, like the first accumulator 220.

The engine 330 is an element which transmits the driving force to the second compressor 310, and is operated through burning of the gas fuel, such as LPG and LNG. The GHP outdoor unit 300 is operated in the GHP method using a burned gas from the engine 330.

The GHP gas pipe 340 is an element for a connection with the at least one indoor unit 10. Specifically, the GHP gas pipe 340 connects the second compressor 310 with the indoor unit gas pipe 12.

The GHP liquid pipe 345 is an element for a connection with the at least one indoor unit 10. Specifically, the GHP liquid pipe 345 connects the second outdoor heat exchanger 360 with the indoor unit liquid pipe 14.

The one pair of connection valves 342 and 346 are an element for a connection with the indoor unit 10. The pair of connection valves 342 and 346 include a connection valve 342 which connects the GHP gas pipe 340 with the indoor unit gas pipe 12, and a connection valve 346 which connects the GHP liquid pipe 345 with the indoor unit liquid pipe 14.

The cooling water heat exchanger 350 is an element which cools the engine 330. The cooling water heat exchanger 350 absorbs heat of the engine 330 overheated by driving of the engine 330 using cooling water.

The cooling water pump 355 is an element which provides a flowing force to the cooling water, and is connected with the cooling water heat exchanger 350. Therefore, the cooling water pump 355 may supply the cooling water to the cooling water heat exchanger 150.

The second outdoor heat exchanger 360 is an element which evaporates or condenses the refrigerant according to the cooling and warming operation of the air conditioner 1, like the first outdoor heat exchanger 250. Specifically, when the air conditioner 1 performs the cooling operation, the refrigerant is condensed, and when the air conditioner 1 performs the warming operation, the refrigerant is evaporated.

The second outdoor heat exchanger control valve 365 is an element which controls the flow of the refrigerant to the second outdoor heat exchanger 360. Since the second outdoor heat exchanger control valve 365 is also well known, detailed description thereof will be omitted.

The waste heat exchanger 370 is an element which evaporates or condenses the refrigerant according to the cooling and warming operation of the air conditioner 1, like the second outdoor heat exchanger 360. The waste heat exchanger 370 may be a plate type heat exchanger. The waste heat exchanger 370 may evaporate or condense the refrigerant together with the second outdoor heat exchanger 360.

The waste heat exchanger control valve 375 is an element which controls the flow of refrigerant to the waste heat exchanger 370. Since the waste heat exchanger control valve 375 is also well known, detailed description thereof will be omitted.

The second four-way valve 380 is an element which switches a passage of the refrigerant flowing in the GHP outdoor unit 300. Since the second four-way valve 380 is also well known, detailed description thereof will be omitted.

The second accumulator connection pipe 390 connects the second accumulator 320 with the second outdoor heat exchanger 360. The second accumulator connection pipe 390 is connected with the low pressure refrigerant common pipe 400 which will be described later.

The second check valve 395 is an element which controls the flow of the refrigerant flowing out of the second outdoor heat exchanger 360. The second check valve 395 is provided at the second accumulator connection pipe 390.

The control valve 397 is an element which controls the flow of the refrigerant flowing out of the second outdoor heat exchanger 360. The control valve 397 may be a solenoid valve. The control valve 397 may be provided at the second accumulator connection pipe 390.

When both of the first compressor 210 of the EHP outdoor unit 200 and the second compressor 310 of the GHP outdoor unit 300 deviate from predetermined operation sections, the control valve 397 is controlled to be closed.

The low pressure refrigerant common pipe 400 is an element which connects the first outdoor heat exchanger 250 of the EHP outdoor unit 200 and the second outdoor heat exchanger 360 of the GHP outdoor unit 300, and supplies a low pressure refrigerant of the GHP outdoor unit 300 to the EHP outdoor unit 200.

When seen from a side surface of the EHP outdoor unit 200, the low pressure refrigerant common pipe 400 is branched from the first accumulator connection pipe 280, and connected with the GHP outdoor unit 300. In addition, when seen from a side surface of the GHP outdoor unit 300, the low pressure refrigerant common pipe 400 is branched from the second accumulator connection pipe 390, and connected with the EHP outdoor unit 200.

Eventually, the low pressure refrigerant common pipe 400 connects the first accumulator connection pipe 280 of the EHP outdoor unit 200 and the second accumulator connection pipe 390 of the GHP outdoor unit 300 with each other.

In a common operation of the EHP outdoor unit 200 and the GHP outdoor unit 300, or a defrosting operation of the EHP outdoor unit 200, the low pressure refrigerant common pipe 400 supplies the low pressure refrigerant of the GHP outdoor unit 300 to the EHP outdoor unit 200.

Here, in the defrosting operation of the first outdoor heat exchanger 250 of the EHP outdoor unit 200, the GHP outdoor unit 300 performs heat exchange of the low pressure refrigerant through the second outdoor heat exchanger 360 and the waste heat exchanger 370. At this time, the low pressure refrigerant flowing out of the second outdoor heat exchanger 360 is supplied to the first accumulator 220 of the EHP outdoor unit 200 through the low pressure refrigerant common pipe 400.

Meanwhile, in the defrosting operation of the second outdoor heat exchanger 360 of the GHP outdoor unit 300, the EHP outdoor unit 200 performs the heat exchange of the low pressure refrigerant through the first outdoor heat exchanger 250, and the GHP outdoor unit 300 performs the heat exchange of the low pressure refrigerant through the waste heat exchanger 370.

Hereinafter, an operation of the air conditioner 1 according to the embodiment will be described in detail.

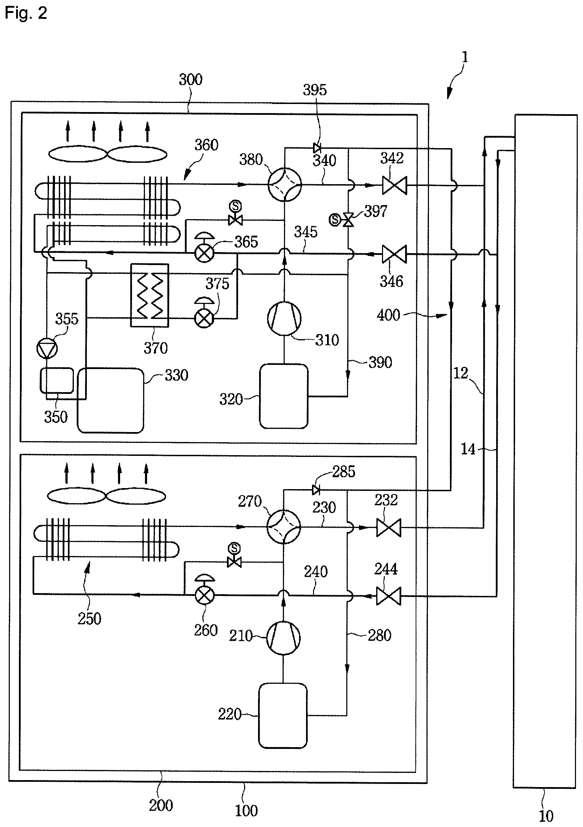

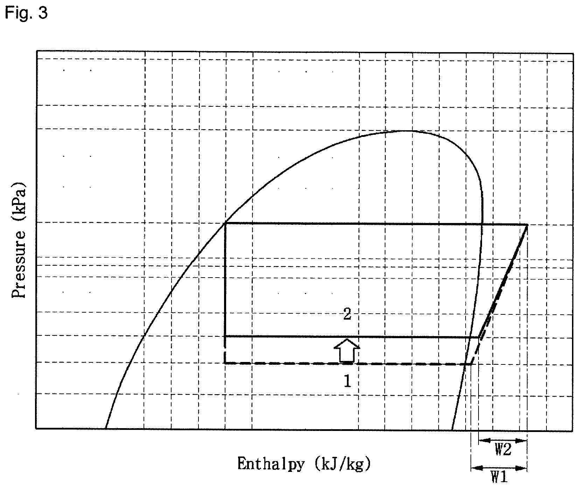

Fig. 2 is a view illustrating the operation of the air conditioner when waste heat of the GHP outdoor unit of the air conditioner of FIG. 1 is used, and Fig. 3 is a view illustrating an efficiency improvement of the EHP outdoor unit of the air conditioner of FIG. 2.

Referring to FIGS. 2 and 3, in the warming operation of the air conditioner 1, the GHP outdoor unit 300 may recover the waste heat of the engine 330 from the cooling water, and thus may be operated at a low pressure which is higher than that in the EHP outdoor unit 200.

Therefore, the air conditioner 1 may open the low pressure refrigerant common pipe 400 at a fan operation section of a GHP. To open the low pressure refrigerant common pipe 400 means that the low pressure refrigerant of the second outdoor heat exchanger 360 of the GHP outdoor unit 300 is transferred not only to the second accumulator 320 but also to the low pressure refrigerant common pipe 400.

The lower pressure refrigerant transferred to the low pressure refrigerant common pipe 400 may then flow to the first accumulator 220 of the EHP outdoor unit 200 through the first accumulator connection pipe 280 of the EHP outdoor unit 200.

Here, when the low pressure refrigerant common pipe 400 is opened, the low pressure of the EHP outdoor unit 200 is increased from a reference numeral 1 to a reference numeral 2, as illustrated in FIG. 3. Required power of the first compressor 210 of the EHP outdoor unit 200 may be reduced from a reference numeral W1 to a reference numeral W2 according to a change in an operation low pressure of the EHP outdoor unit 200. This means that efficiency of the EHP outdoor unit 200 is enhanced.

The low pressure of the GHP outdoor unit 300 may be reduced through the low pressure refrigerant common pipe 400. However, when an operation rate of the fan is high, efficiency enhancement of the EHP outdoor unit 200 is much higher, compared with an efficiency reduction of the GHP outdoor unit 300, and thus overall efficiency of the air conditioner 1 may be enhanced.

Generally, in the warming operation of the air conditioner 1, the operation rate of the fan is about 50%, and thus the efficiency reduction of the GHP outdoor unit 300 may be minimized.

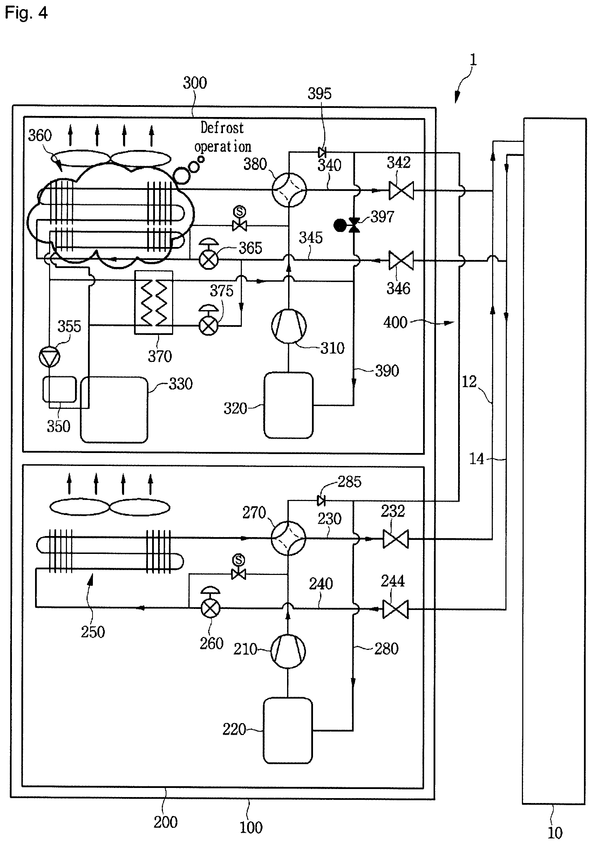

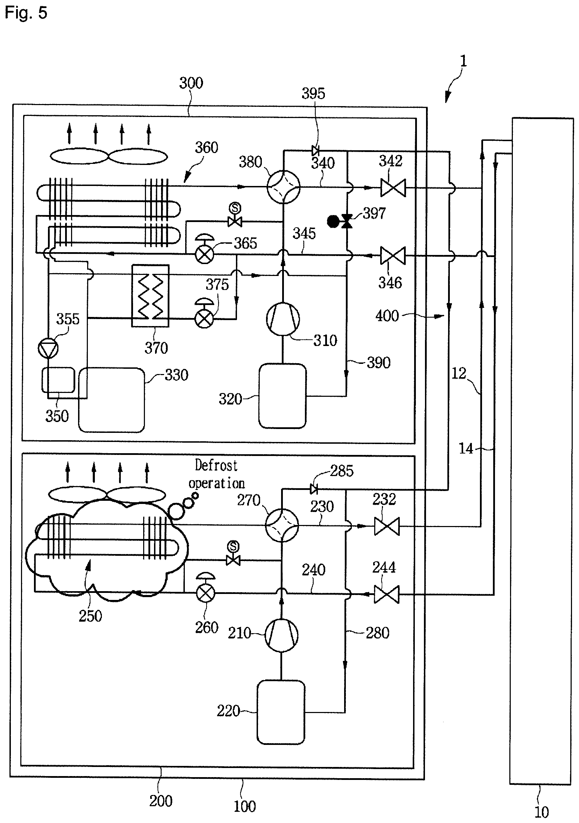

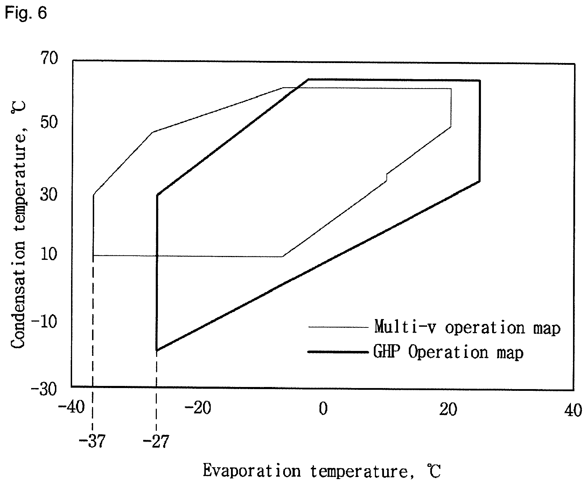

Fig. 4 is a view illustrating an operation of the air conditioner when the first outdoor heat exchanger of the EHP outdoor unit of the air conditioner of FIG. 1 is used, Fig. 5 is a view illustrating an operation of the air conditioner when the second outdoor heat exchanger of the GHP outdoor unit of the air conditioner of FIG. 1 is used, and Fig. 6 is a view illustrating a hybrid operation map when the air conditioner of FIGS. 4 and 5 is operated.

Referring to FIGS. 4 to 6, in the air conditioner 1, when the common operation of the both outdoor units 200 and 300 is performed using the low pressure refrigerant common pipe 400, as previously illustrated in FIGS. 2 and 3, the low pressure is reduced according to a reduction of external air.

At this time, the first compressor 210 of the EHP outdoor unit 200 and the second compressor 310 of the GHP outdoor unit 300 have different operation sections from each other, as illustrated in FIG. 6. In FIG. 6, a multi-v operation map is the operation section of the EHP outdoor unit 200, and a GHP operation map is the operation section of the GHP outdoor unit 300.

As previously illustrated in FIGS. 2 and 3, the low pressure refrigerant common pipe 400 may be opened and used in a section in which the common operation of the EHP outdoor unit 200 and the GHP outdoor unit 300 may be performed.

However, when the GHP operation section is deviated due to the reduction of the low pressure, the EHP outdoor unit 200 and the GHP outdoor unit 300 may be operated independently. At this time, when the both operation sections are deviated, the air conditioner 1 closes the control valve 397 of the GHP outdoor unit 300, and then operates the outdoor unit 100.

In the embodiment, when the frost is generated at the first outdoor heat exchanger 250 of the EHP outdoor unit 200 or the second outdoor heat exchanger 360 of the GHP outdoor unit 300 due to the reduction of the external air, the defrosting operation is performed through the waste heat exchanger 370 using the waste heat of the engine 330, and thus the warming operation may be continuously performed.

Specifically, as illustrated in FIG. 4, when the frost is generated at the second outdoor heat exchanger 360 of the GHP outdoor unit 300 due to the reduction of the external air, the EHP outdoor unit 200 performs the warming operation through the first outdoor heat exchanger 250, and the GHP outdoor unit 300 performs the warming operation through the waste heat exchanger 370. At this time, the GHP outdoor unit 300 performs the defrosting operation of the second outdoor heat exchanger 360 through a hot gas of the engine 330.

As illustrated in FIG. 5, when the frost is generated at the first outdoor heat exchanger 250 of the EHP outdoor unit 200 due to the reduction of the external air, the GHP outdoor unit 300 transfers the low pressure refrigerant of the second outdoor heat exchanger 360 to the first accumulator 220 of the EHP outdoor unit 200 through the low pressure refrigerant common pipe 400.

And the EHP outdoor unit 200 performs the defrosting operation of the first outdoor heat exchanger 250. That is, as this time, the EHP outdoor unit 200 may use the second outdoor heat exchanger 360 of the GHP outdoor unit 300 as a heat exchanger.

Therefore, in the embodiment, even when the first outdoor heat exchanger 250 of the EHP outdoor unit 200 or the second outdoor heat exchanger 360 of the GHP outdoor unit 300 is covered with the frost, and thus the defrosting operation is performed, the warming operation may be continuously performed without regard to this.

In other words, in the embodiment, since the warming operation may be continuously performed while the defrosting operation is being performed due to the frosting, it is possible to prevent performance degradation of the air conditioner 1.

## Claims

1. An air conditioner comprising:
at least one indoor unit (10);
an EHP outdoor unit (200) connected to the at least one indoor unit (10), and comprising
a first compressor (210) driven by the EHP outdoor unit (200) using electric power, and for compressing refrigerant,
a first outdoor heat exchanger (250) for heat exchange of a refrigerant, and
a first accumulator (220) configured to supply the refrigerant to the first compressor (210);
a GHP outdoor unit (300) connected to the at least one indoor unit (10), and comprising
a second compressor (310) for compressing refrigerant,
an engine (330) configured to drive the second compressor (310) through a burned gas,
a second outdoor heat exchanger (360) for heat exchange of the refrigerant, and
a waste heat exchanger (370) configured to exchange heat with the refrigerant using waste heat of the engine (330); and
a low pressure refrigerant common pipe (400) connecting the first outdoor heat exchanger (250) with the second outdoor heat exchanger (360) and being configured to supply a low pressure refrigerant of the GHP outdoor unit (300) to the EHP outdoor unit (200);
**characterized in that**:
the EHP outdoor unit (200) further comprises a first accumulator connection pipe (280) configured to connect the first outdoor heat exchanger (250) with the first accumulator (220); and
the first low pressure refrigerant common pipe (400) is branched from the first accumulator connection pipe (280), and connected to the GHP outdoor unit (300), and is further configured
to connect the second outdoor heat exchanger (360) with the first accumulator (220) of the EHP outdoor unit (200) and
to supply low pressure refrigerant flowing out of the second outdoor heat exchanger (360) to the first accumulator (220) of the EHP outdoor unit (200).

2. The air conditioner according to claim 1, wherein the low pressure refrigerant common pipe (400) is configured to supply the low pressure refrigerant of the GHP outdoor unit (300) to the EHP outdoor unit (200) when a common operation of the EHP outdoor unit (200) and the GHP outdoor unit (300) is performed or a defrosting operation of the EHP outdoor unit (200) is performed.

3. The air conditioner according to claim 1,
wherein the GHP outdoor unit (300) comprises
a second accumulator (320) configured to supply the refrigerant to the second compressor (310), and
a second accumulator connection pipe (390) configured to connect the second outdoor heat exchanger (360) with the second accumulator (320), and
wherein the low pressure refrigerant common pipe (400) is branched from the second accumulator connection pipe (390) and connected to the EHP outdoor unit (200).

4. The air conditioner according to claim 1, further comprising a first check valve (285) installed on the first accumulator connection pipe (280) and configured to control a flow of the refrigerant flowing out of the first outdoor heat exchanger (250).

5. The air conditioner according to claim 3, further comprising a second check valve (395) installed on the second accumulator connection pipe (390) configured to control a flow of the refrigerant flowing out of the second outdoor heat exchanger (360).

6. The air conditioner according to claim 3, further comprising a control valve (397) installed on the second accumulator connection pipe (390) and configured to control a flow of the refrigerant flowing out of the first outdoor heat exchanger (250).

7. The air conditioner according to claim 6, wherein the control valve (397) is configured to be closed when the first and second compressors (210, 310) deviate from predetermined operation sections.

8. The air conditioner according to claim 6, wherein the control valve (397) comprises a solenoid valve.

9. The air conditioner according to claim 7, wherein the GHP outdoor unit (300) is configured to operate such that heat exchange of the low pressure refrigerant through the second outdoor heat exchanger (360) and the waste heat exchanger (370) is performed when a defrosting operation of the first outdoor heat exchanger (250) is performed.

10. The air conditioner according to claim 9, wherein the GHP outdoor unit (300) is configured to operate such that the low pressure refrigerant flowing out of the second outdoor heat exchanger (360) is supplied to the first accumulator (220) of the EHP outdoor unit (200) through the low pressure refrigerant common pipe (400) when a common operation of the EHP outdoor unit (200) and the GHP outdoor unit (300) is performed or the defrosting operation of the first outdoor heat exchanger (250) is performed.

11. The air conditioner according to claim 7, wherein when a defrosting operation of the second outdoor heat exchanger (360) is performed, the EHP outdoor unit (200) is configured to perform heat exchange of the low pressure refrigerant through the first outdoor heat exchanger (250), and the GHP outdoor unit (300) performs the heat exchange of the low pressure refrigerant through the waste heat exchanger (370).

12. A control method of an air conditioner according to any one of claims 1 to 11,
**characterized by** the control method comprising:
driving the EHP outdoor unit (200) and the GHP outdoor unit (300); and
supplying the low pressure refrigerant of the GHP outdoor unit (300) flowing out of the second outdoor heat exchanger (360) to the first accumulator (220) of the EHP outdoor unit (200) through the low pressure refrigerant common pipe (400) and the first accumulator connection pipe (280).

13. The control method according to claim 12, wherein the low pressure refrigerant common pipe (400) supplies the low pressure refrigerant of the GHP outdoor unit (300) to the first accumulator (220) of the EHP outdoor unit (200) when a common operation of the EHP outdoor unit (200) and the GHP outdoor unit (300) is performed or a defrosting operation of the EHP outdoor unit (200) is performed.

## Patentansprüche

1. Klimaanlage mit:
mindestens einer Inneneinheit (10);
einer EHP-Außeneinheit (200), die mit der mindestens einen Inneneinheit (10) verbunden ist und die aufweist:
einen ersten Verdichter (210), der durch die EHP-Außeneinheit (200) unter Verwendung von elektrischem Strom betrieben wird, und zum Verdichten von Kältemittel dient,
einen ersten Außenwärmetauscher (250) zum Wärmetausch eines Kältemittels, und einen ersten Akkumulator (220), der konfiguriert ist, das Kältemittel dem ersten Verdichter (210) zuzuführen;
eine GHP-Außeneinheit (300), die mit der mindestens einen Inneneinheit (10) verbunden ist und die aufweist:
einen zweiten Verdichter (310) zum Verdichten von Kältemittel,
einen Verbrennungsmotor (330), der konfiguriert ist, den zweiten Verdichter (310) durch ein Verbrennungsgas zu betreiben,
einen zweiten Außenwärmetauscher (360) zum Wärmetausch des Kältemittels, und
einen Abwärmetauscher (370), der konfiguriert ist, Wärme mit dem Kältemittel unter Verwendung von Abwärme des Verbrennungsmotors (330) zu tauschen; und
eine gemeinsame Niederdruckkältemittelleitung (400), die den ersten Außenwärmetauscher (250) mit dem zweiten Außenwärmetauscher (360) verbindet und konfiguriert ist, ein Niederdruckkältemittel der GHP-Außeneinheit (300) der EHP-Außeneinheit (200) zuzuführen;
**dadurch gekennzeichnet, dass**:
die EHP-Außeneinheit (200) ferner eine erste Akkumulatorverbindungsleitung (280) aufweist, die konfiguriert ist, den ersten Außenwärmetauscher (250) mit dem ersten Akkumulator (220) zu verbinden; und
die erste gemeinsame Niederdruckkältemittelleitung (400) von der ersten Akkumulatorverbindungsleitung (280) abzweigt, und mit der GHP-Außeneinheit (300) verbunden ist, und ferner konfiguriert ist
den zweiten Außenwärmetauscher (360) mit dem ersten Akkumulator (220) der EHP-Außeneinheit (200) zu verbinden, und
Niederdruckkältemittel, das aus dem zweiten Außenwärmetauscher (360) herausfließt, dem ersten Akkumulator (220) der EHP-Außeneinheit (200) zuzuführen.

2. Klimaanlage nach Anspruch 1, wobei die gemeinsame Niederdruckkältemittelleitung (400) konfiguriert ist, das Niederdruckkältemittel der GHP-Außeneinheit (300) der EHP-Außeneinheit (200) zuzuführen, wenn ein gemeinsamer Betrieb der EHP-Außeneinheit (200) und der GHP-Außeneinheit (300) durchgeführt wird oder ein Enteisungsbetrieb der EHP-Außeneinheit (200) durchgeführt wird.

3. Klimaanlage nach Anspruch 1,
wobei die GHP-Außeneinheit (300) aufweist:
einen zweiten Akkumulator (320), der konfiguriert ist, das Kältemittel dem zweiten Verdichter (310) zuzuführen, und
eine zweite Akkumulatorverbindungsleitung (390), die konfiguriert ist, den zweiten Außenwärmetauscher (360) mit dem zweiten Akkumulator (320) zu verbinden, und
wobei die gemeinsame Niederdruckkältemittelleitung (400) von der zweiten Akkumulatorverbindungsleitung (390) abzweigt und mit der EHP-Außeneinheit (200) verbunden ist.

4. Klimaanlage nach Anspruch 1, die ferner ein erstes Rückschlagventil (285) aufweist, das an der ersten Akkumulatorverbindungsleitung (280) installiert und konfiguriert ist, einen Durchfluss des Kältemittels zu steuern, das aus dem ersten Außenwärmetauscher (250) herausfließt.

5. Klimaanlage nach Anspruch 3, die ferner ein zweites Rückschlagventil (395) aufweist, das an der zweiten Akkumulatorverbindungsleitung (390) installiert und konfiguriert ist, einen Durchfluss des Kältemittels zu steuern, das aus dem zweiten Außenwärmetauscher (360) herausfließt.

6. Klimaanlage nach Anspruch 3, die ferner ein Steuerventil (397) aufweist, das an der zweiten Akkumulatorverbindungsleitung (390) installiert und konfiguriert ist, einen Durchfluss des Kältemittels zu steuern, das aus dem ersten Außenwärmetauscher (250) herausfließt.

7. Klimaanlage nach Anspruch 6, wobei das Steuerventil (397) konfiguriert ist, geschlossen zu werden, wenn der erste und zweite Verdichter (210, 310) von vorgegebenen Betriebsbereichen abweichen.

8. Klimaanlage nach Anspruch 6, wobei das Steuerventil (397) ein Magnetventil aufweist.

9. Klimaanlage nach Anspruch 7, wobei die GHP-Außeneinheit (300) konfiguriert ist, so zu arbeiten, dass ein Wärmetausch des Niederdruckkältemittels durch den zweiten Außenwärmetauscher (360) und den Abwärmetauscher (370) durchgeführt wird, wenn ein Enteisungsbetrieb des ersten Außenwärmetauschers (250) durchgeführt wird.

10. Klimaanlage nach Anspruch 9, wobei die GHP-Außeneinheit (300) konfiguriert ist, so zu arbeiten, dass das Niederdruckkältemittel, das aus dem zweiten Außenwärmetauscher (360) herausfließt, dem ersten Akkumulator (220) der EHP-Außeneinheit (200) durch die gemeinsame Niederdruckkältemittelleitung (400) zugeführt wird, wenn ein gemeinsamer Betrieb der EHP-Außeneinheit (200) und der GHP-Außeneinheit (300) durchgeführt wird oder der Enteisungsbetrieb des ersten Außenwärmetauschers (250) durchgeführt wird.

11. Klimaanlage nach Anspruch 7, wobei wenn ein Enteisungsbetrieb des zweiten Außenwärmetauschers (360) durchgeführt wird, die EHP-Außeneinheit (200) konfiguriert ist, einen Wärmetausch des Niederdruckkältemittels durch den ersten Außenwärmetauscher (250) durchzuführen, und die GHP-Außeneinheit (300) den Wärmetausch des Niederdruckkältemittels durch den Abwärmetauscher (370) durchführt.

12. Steuerungsverfahren einer Klimaanlage nach einem der Ansprüche 1 bis 11,
**dadurch gekennzeichnet, dass** das Steuerungsverfahren aufweist:
Betreiben der EHP-Außeneinheit (200) und der GHP-Außeneinheit (300); und
Zuführen des Niederdruckkältemittels der GHP-Außeneinheit (300), das aus dem zweiten Außenwärmetauscher (360) herausfließt, zum ersten Akkumulator (220) der EHP-Außeneinheit (200) durch die gemeinsame Niederdruckkältemittelleitung (400) und die erste Akkumulatorverbindungsleitung (280).

13. Steuerungsverfahren nach Anspruch 12, wobei die gemeinsame Niederdruckkältemittelleitung (400) das Niederdruckkältemittel der GHP-Außeneinheit (300) dem ersten Ackumulator (220) der EHP-Außeneinheit (200) zuführt, wenn ein gemeinsamer Betrieb der EHP-Außeneinheit (200) und der GHP-Außeneinheit (300) durchgeführt wird oder ein Enteisungsbetrieb der EHP-Außeneinheit (200) durchgeführt wird.

## Revendications

1. Climatiseur, comprenant :
au moins une unité intérieure (10) ;
une unité extérieure EHP (200) reliée à ladite au moins une unité intérieure (10), et comprenant
un premier compresseur (210) entraîné par l'unité extérieure EHP (200) au moyen d'un courant électrique, pour la compression d'un réfrigérant,
un premier échangeur de chaleur extérieur (250) pour l'échange de chaleur d'un réfrigérant, et un premier accumulateur (220) prévu pour refouler le réfrigérant vers le premier compresseur (210) ;
une unité extérieure GHP (300) reliée à ladite au moins une unité intérieure (10), et comprenant
un deuxième compresseur (310) pour la compression du réfrigérant,
un moteur (330) prévu pour entraîner le deuxième compresseur (310) par un gaz de combustion,
un deuxième échangeur de chaleur extérieur (360) pour l'échange de chaleur du réfrigérant, et
un échangeur de chaleur perdue (370) prévu pour l'échange de chaleur avec le réfrigérant au moyen de la chaleur perdue du moteur (330) ; et
un conduit commun (400) de réfrigérant sous basse pression reliant le premier échangeur de chaleur extérieur (250) au deuxième échangeur de chaleur extérieur (360), prévu pour refouler un réfrigérant sous basse pression de l'unité extérieure GHP (300) vers l'unité extérieure EHP (200) ;
**caractérisé en ce que** :
l'unité extérieure EHP (200) comprend en outre un premier conduit de connexion (280) d'accumulateur prévu pour relier le premier échangeur de chaleur extérieur (250) au premier accumulateur (220) ; et
le premier conduit commun (400) de réfrigérant sous basse pression est dérivé du premier conduit de connexion (280) d'accumulateur, et est relié à l'unité extérieure GHP (300), et est en outre prévu
pour relier le deuxième échangeur de chaleur extérieur (360) au premier accumulateur (220) de l'unité extérieure EHP (200), et
pour refouler le réfrigérant sous basse pression s'écoulant hors du deuxième échangeur de chaleur extérieur (360) vers le premier accumulateur (220) de l'unité extérieure EHP (200).

2. Climatiseur selon la revendication 1, où le conduit commun (400) de réfrigérant sous basse pression est prévu pour refouler le réfrigérant sous basse pression de l'unité extérieure GHP (300) vers l'unité extérieure EHP (200) si un fonctionnement commun de l'unité extérieure EHP (200) et de l'unité extérieure GHP (300) est exécuté, ou si un fonctionnement de dégivrage de l'unité extérieure EHP (200) est exécuté.

3. Climatiseur selon la revendication 1,
où l'unité extérieure GHP (300) comprend
un deuxième accumulateur (320) prévu pour refouler le réfrigérant vers le deuxième compresseur (310), et
un deuxième conduit de connexion (390) d'accumulateur prévu pour relier le deuxième échangeur de chaleur extérieur (360) au deuxième accumulateur (320), et
où le conduit commun (400) de réfrigérant sous basse pression est dérivé du deuxième conduit de connexion (390) d'accumulateur et est relié à l'unité extérieure EHP (200).

4. Climatiseur selon la revendication 1, comprenant en outre un premier clapet antiretour (285) monté dans le premier conduit de connexion (280) d'accumulateur et prévu pour commander le flux du réfrigérant s'écoulant hors du premier échangeur de chaleur extérieur (250).

5. Climatiseur selon la revendication 3, comprenant en outre un deuxième clapet antiretour (395) monté dans le deuxième conduit de connexion (390) d'accumulateur et prévu pour commander le flux du réfrigérant s'écoulant hors du deuxième échangeur de chaleur extérieur (360).

6. Climatiseur selon la revendication 3, comprenant en outre une vanne de commande (397) montée dans le deuxième conduit de connexion (390) d'accumulateur et prévue pour commander le flux du réfrigérant s'écoulant hors du premier échangeur de chaleur extérieur (250).

7. Climatiseur selon la revendication 6, où la vanne de commande (397) est prévue pour être fermée si le premier et le deuxième compresseurs (210, 310) s'écartent de sections de fonctionnement définies.

8. Climatiseur selon la revendication 6, où la vanne de commande (397) comprend une électrovanne.

9. Climatiseur selon la revendication 7, où l'unité extérieure GHP (300) est prévue pour fonctionner de manière à effectuer un échange de chaleur du réfrigérant sous basse pression par le deuxième échangeur de chaleur extérieur (360) et l'échangeur de chaleur perdue (370) si un fonctionnement de dégivrage du premier échangeur de chaleur extérieur (250) est exécuté.

10. Climatiseur selon la revendication 9, où l'unité extérieure GHP (300) est prévue pour fonctionner de telle manière que le réfrigérant sous basse pression s'écoulant hors du deuxième échangeur de chaleur extérieur (360) est refoulé vers le premier accumulateur (220) de l'unité extérieure EHP (200) par le conduit commun (400) de réfrigérant sous basse pression si un fonctionnement commun de l'unité extérieure EHP (200) et de l'unité extérieure GHP (300) est exécuté ou si le fonctionnement de dégivrage du premier échangeur de chaleur extérieur (250) est exécuté.

11. Climatiseur selon la revendication 7, où, si un fonctionnement de dégivrage du deuxième échangeur de chaleur extérieur (360) est exécuté, l'unité extérieure EHP (200) est prévue pour effectuer un échange de chaleur du réfrigérant sous basse pression par le premier échangeur de chaleur extérieur (250), et l'unité extérieure GHP (300) effectue l'échange de chaleur du réfrigérant sous basse pression par l'échangeur de chaleur perdue (370).

12. Procédé de commande d'un climatiseur selon l'une des revendications 1 à 11, **caractérisé en ce que** ledit procédé de commande comprend :
l'entraînement de l'unité extérieure EHP (200) et de l'unité extérieure GHP (300) ; et
le refoulement du réfrigérant sous basse pression de l'unité extérieure GHP (300) s'écoulant hors du deuxième échangeur de chaleur extérieur (360) vers le premier accumulateur (220) de l'unité extérieure EHP (200) par le conduit commun (400) de réfrigérant sous basse pression et le premier conduit de connexion (280) d'accumulateur.

13. Procédé de commande selon la revendication 12, où le conduit commun (400) de réfrigérant sous basse pression refoule le réfrigérant sous basse pression de l'unité extérieure GHP (300) vers le premier accumulateur (220) de l'unité extérieure EHP (200) si un fonctionnement commun de l'unité extérieure EHP (200) et de l'unité extérieure GHP (300) est exécuté, ou si un fonctionnement de dégivrage de l'unité extérieure EHP (200) est exécuté.
